# EUROPEAN PATENT APPLICATION

(11) **EP 1 010 554 A2**
(43) Date of publication of application: **21.06.2000**
(21) Application number: 99307581.1
(22) Date of filing: 24.09.1999
(51) Int. Cl.: B60C 19/12, B29D 30/38

(54) **A puncture resistant material for a tire**

(30) Priority: 18.12.1998 US 216314
(71) Applicant: Specialized Bicycle Components, Inc., Morgan Hill, CA 95037 (US)
(72) Inventor: Clark,Alan L., Morgan Hill, California 95037 (US)
(74) Representative: Wombwell, Francis

(57) **Abstract**

A method and apparatus for increasing puncture-resistance in a tire is provided. A puncture-resistant material (240) is manufactured by infusing a polyaramid fiber strip (260) with an elastomer (250) including polyaramid fibers. This puncture-resistant material is within the tire, thereby increasing the puncture-resistance of the tire.

## Description

### FIELD OF THE INVENTION

The present invention relates to tires, and more specifically, to increasing puncture-resistance in tires.

### BACKGROUND

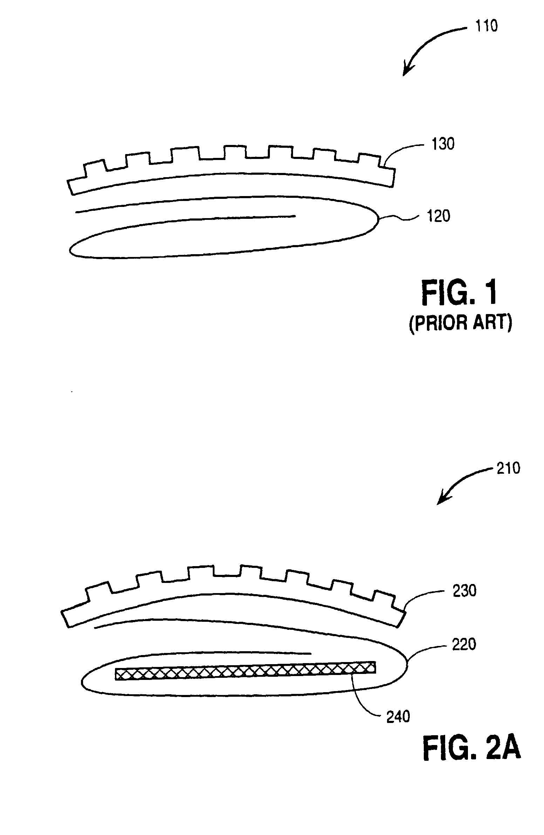

A tire is likely to be broken or punctured if its tread is pierced with a nail or any other pointed object. A cross-section of a prior art tire is shown in Figure 1. The tire 110 includes a tread 130 coupled to carcass plies 120. Normal tread rubber and casing provide inadequate protection due to their inherently poor resistance to sharp or pointed objects.

Therefore, an improved tire with better resistance to puncture is described.

### SUMMARY OF THE INVENTION

A method and apparatus for increasing puncture-resistance in a tire is described. A puncture-resistant material is manufactured by infusing a polyaramid fiber strip with an elastomer including polyaramid fibers. This puncture-resistant material is placed within the tire, thereby increasing the puncture-resistance of the tire.

### BRIEF DESCRIPTION OF THE DRAWINGS

The present invention is illustrated by way of example, and not by way of limitation, in the figures of the accompanying drawings and in which like reference numerals refer to similar elements and in which:

Figure 1 is a cross-section of a prior art tire.

Figure 2A is a cross-section of one embodiment of a tire including the puncture-resistant material.

Figure 2B is a cross-section of another embodiment of a tire including the puncture-resistant material.

Figure 2C is an exploded view showing the layers of a tire including the puncture resistant material.

Figure 3 is a flowchart illustrating one embodiment of the making of the puncture-resistant material.

Figure 4 is a flowchart illustrating one embodiment of the making of a tire including the puncture-resistant material.

### DETAILED DESCRIPTION

A method an apparatus for improving puncture resistance of a tire is described. A strip of fabric is placed in the along the treads of the tire, to improve puncture resistance. The strip of fabric is a woven fabric infused with fibers. Any holes in the woven fabric are blocked by the fibers, thereby producing a puncture resistant strip that has no weak points.

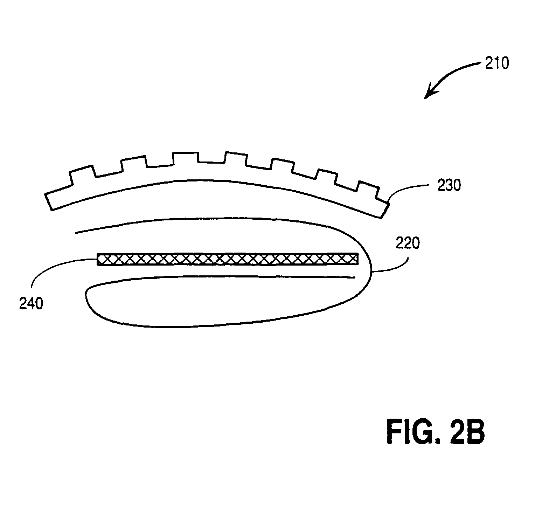

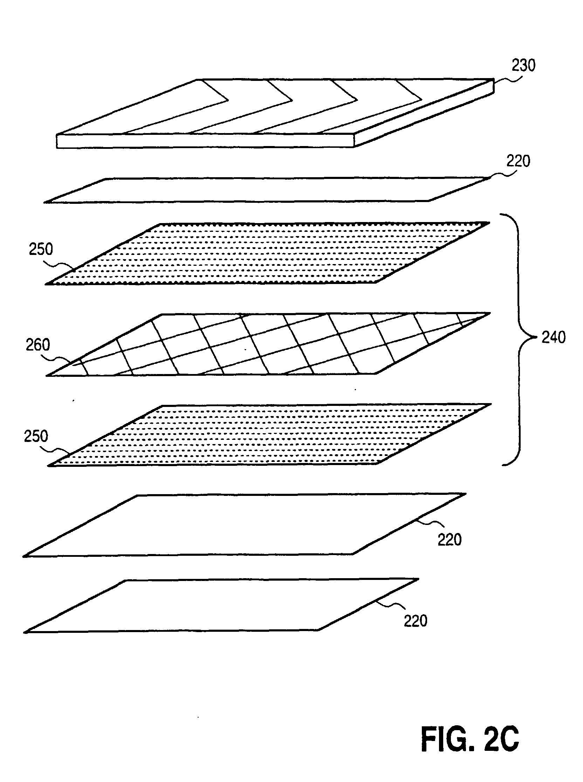

Figure 2 is a cross-section of one embodiment of a tire including the puncture-resistant material. The tire 210 includes treads 230 on the exterior of the tire, a plurality of layers 220, and a puncture-resistant layer 240. For one embodiment, the treads 230 are of rubber. For one embodiment, the plurality of layers 220 are nylon, polyester, or rayon infused with rubber. The puncture-resistant layer 240 runs along the entire circumference of the tire, such that no place along the tire may be easily punctured.

The puncture resistant layer 240 is a combination of materials. For one embodiment, the puncture resistant layer 240 is a polyaramid fiber strip 260 fused with an elastomeric material 250. The fiber strip 260 has holes in it, as all fiber does. These holes in the fiber strip 260 are blocked by the elastomeric material 250, which contains fibers.

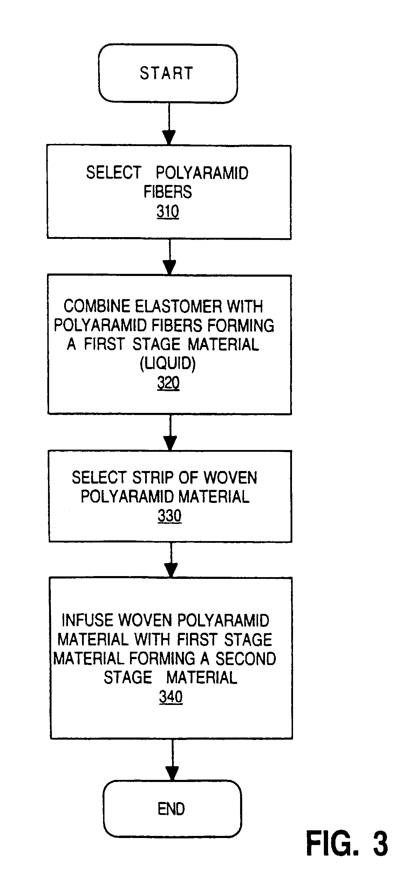

For one embodiment, the polyaramid fiber strip 260 is a woven strip and has fibers at an angle to the circle defined by the circumference of the tire. For one embodiment, the primary orientation of the fibers of the polyaramid fiber strip 260 is at a 45 degree angle to the circumference of the tire. For one embodiment, the elastomeric material 250 and woven polyaramid fiber strip 260 are calendered or co-extruded prior the insertion of the puncture-resistant layer 240 into the tire 210. For one embodiment, the polyaramid fiber strip is a Kevlar® fiber strip. For one embodiment, the elastomeric material is a rubber material including polyaramid fibers. One embodiment of the manufacturing of this strip is described in Figure 3, below.

Figure 3 is a flowchart of one embodiment of making the puncture resistant material. Polyaramid fibers are selected, at block 310. For one embodiment, the polyaramid fiber is Kevlar® fibers. Alternatively, other polyaramid materials may be used.

An elastomeric material is combined with the polyaramid fibers, at block 320. For one embodiment, the elastomeric material is rubber. Alternately, another material having similar characteristics may be used. For one embodiment, the elastomeric material is a semiliquid, in a high viscosity moldable form. Alternatively, the elastomeric material may be in a powder form or another form.

The mixture of the elastomeric material and the polyaramid fibers, for one embodiment, remains in a high viscosity semiliquid moldable form. The elastomeric material and polyaramid fibers for one embodiment form a "first stage material."

At block 330, a strip of polyaramid material is selected. For one embodiment, the polyaramid strip is woven. For one embodiment, the polyaramid strip is Kevlar®, or a similar material.

At block 340, the first stage material and the strip of polyaramid material are combined. For one embodiment, the first stage material is extruded onto the strip of polyaramid material. For another embodiment, the first stage material is calendered onto the strip of polyaramid material. The strip of polyaramid material is thereby infused with the first stage material, and the two materials together form a single strip of solid fabric-like material, a "second stage material." This second stage material is flexible like a fabric, but does not have holes like a fabric, because the holes are blocked by the first stage material infused into the polyaramid material. This second stage material is then placed in the tire making process, as will be described below, to improve puncture resistance of a tire.

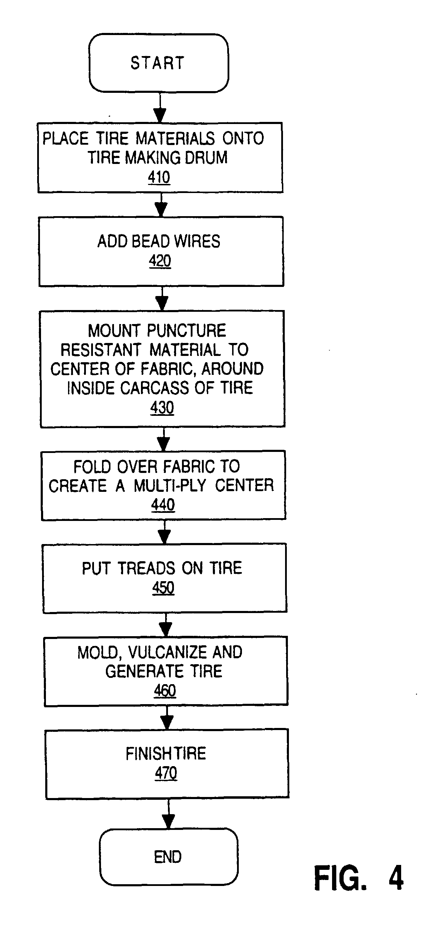

Figure 4 is a flowchart of one embodiment of the tire production process. A tire production process may consist of: (1) compounding and mixing elastomers, carbon blacks, pigments, and other chemicals such as vulcanizing agents, accelerators, plasticizers, and initiators; (2) extruding the rubber mixture between pairs of large rollers to prepare it for the feed mill, where it is extruded into strips to take the shape of the tread material; (3) processing fabrics and coating them with rubber in a calendering operation; (4) processing bead wires; (5) cutting and cooling the various extruded and calendered outputs; (6) assembling all of the components (bead wires, coated fabrics, treads, etc.) on a tire-building machine; (7) lubricating the green tire (green tire spraying) (8) vulcanizing and molding the tire with heat and pressure; and (9) finishing the product.

The tire building process begins when rubberized fabric is placed on a drum, at block 410, after which the bead wires are added, at block 420. The puncture resistant material is mounted to the center of the fabric around the inside carcass of the tire, at block 430. The fabric is turned up around them, at block 440.

At this stage the belts, tread, and sidewall rubber are wrapped around the drum over the fabric, at block 450. The drum is then collapsed and the uncured (green) tire is coated with a lubricant (green tire spray) and loaded into an automatic tire press to be molded and cured, at block 460. Prior to curing, the tire looks like a barrel that is open at both ends. The curing process converts the rubber, fabric, and wires into a tough, highly elastic product while also bonding the various parts of the tire into one single unit. After curing, the tire is cooled by mounting it on a rim and deflating it to reduce internal stress. Finishing the tire, at block 470, involves trimming, buffing, balancing, and quality control inspection.

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative rather than a restrictive sense.

## Claims

1. In a tire including a sidewall, treads, and body, a strip of puncture resistant material within the tire, the strip of puncture resistant material comprising:
a polyaramid strip; and
a first material including an elastomer and polyaramid fibers, the first material bonded to the polyaramid strip, thereby forming the puncture resistant material.

2. The strip of puncture resistant material claimed in claim 1, wherein the first material is calendered onto the polyaramid strip.

3. The strip of puncture resistant material claimed in claim 1, wherein the first material is co-extruded with the polyaramid strip.

4. The strip of puncture resistant material claimed in claim 1, wherein the polyaramid strip is a woven polyaramid strip.

5. The strip of puncture resistant material claimed in claim 1, wherein the first material is a semiliquid infused into the polyaramid strip.

6. A tire comprising:
a carcass;
tread; and
a strip of puncture resistant material comprising:
a polyaramid strip bonded to a first material including an elastomer and polyaramid fibers.

7. The tire of claim 6, wherein the strip of puncture resistance material is between folded plies of the carcass.

8. The tire of claim 6, wherein the first material is calendered onto the polyaramid strip.

9. The tire of claim 6, wherein the first material is co-extruded with the polyaramid strip.

10. The tire of claim 6, wherein the polyaramid strip is a woven polyaramid strip.

11. The tire of claim 6, wherein the first material is a liquid infused into the polyaramid strip.

12. A method of manufacturing a tire comprising:
adding a puncture-resistant material to the tire comprising the step of:
coupling a polyaramid fiber strip with a first material comprising an elastomer and polyaramid fibers, thereby creating the puncture-resistant material; and
placing the puncture-resistant material within the tire;
finishing the tire.

13. The method of claim 12, wherein the step of coupling the polyaramid fiber strip with the first material comprises calendering the polyaramid fiber strip with the first material.

14. The method of claim 12, wherein the step of coupling the polyaramid fiber strip with the first material comprises co-extruding the polyaramid fiber strip with the first material.

15. The method of claim 12, wherein the step of placing the puncture-resistant material within the tire comprises placing the strip of puncture resistance material between folded plies of a carcass of the tire.

16. A method of manufacturing a puncture-resistant material within a tire to increase puncture resistance of the tire, the method comprising the steps of:
infusing a polyaramid fiber strip with a first material, the first material comprising an elastomer including polyaramid fibers.

17. The method of claim 16, wherein the puncture resistant material is placed between folded plies of a carcass of the tire.

18. The tire of claim 16, wherein the puncture resistant material is placed along an inside circumference of the tire.

19. The method of claim 16, wherein the step of infusing the polyaramid fiber strip with the first material comprises calendering the polyaramid fiber strip with the first material.

20. The method of claim 16, wherein the step of infusing the polyaramid fiber strip with the first material comprises co-extruding the polyaramid fiber strip with the first material.
